# NEUE EUROPÄISCHE PATENTSCHRIFT

(11) **EP 1 156 242 B2**
(45) Veröffentlichungstag und Bekanntmachung des Hinweises auf die Entscheidung über den Einspruch: **15.08.2012**
(45) Hinweis auf die Patenterteilung: 16.11.2005
(21) Anmeldenummer: 01107246.9
(22) Anmeldetag: 23.03.2001
(51) Int. Cl.: F16J 15/32

(54) **Radialwellendichtring**
Radial shaft sealing ring
Anneau d'étanchéité à lèvres radiales

(30) Priorität: 22.04.2000 DE 10019994
(43) Veröffentlichungstag der Anmeldung: 21.11.2001
(73) Patentinhaber: Carl Freudenberg KG, 69469 Weinheim (DE)
(72) Erfinder: Vogt, Rolf, 68723 Oftersheim (DE); Stadler, Rolf, 64646 Heppenheim (DE); Reinhardt, Hans, 69469 Weinheim (DE)

(56) Entgegenhaltungen:
- DE-A- 2 333 208
- DE-A- 2 352 992
- DE-A1- 1 957 470
- DE-A1- 2 718 659
- DE-A1- 4 422 853
- JP-A- 07 301 339
- PATENT ABSTRACTS OF JAPAN vol. 1997, no. 03, 31. März 1997 (1997-03-31) -& JP 08 303604 A (KIIPAA KK), 22. November 1996 (1996-11-22)
- Konstruktionszeichnung 827 SS-76-10/14 PMI E

## Beschreibung

### Technisches Gebiet

Die Erfindung befasst sich mit der Abdichtung von umlaufenden Wellen, die im wesentlichen aus einem vorgeformten Ring aus Gummi oder ähnlichen Plastomeren besteht und die in Ringspalte eingesetzt werden um Wellen oder ähnliche Maschinenteile abzudichten. Zum einen soll das in der Maschine vorhandene Öl zurückgehalten werden und zum anderen soll kein Schmutz oder Staub von außen in die Maschine eintreten. Derartige Dichtungen sind insbesondere bei Kraftfahrzeugen in Gebrauch.

### Stand der Technik

Durch die DE OS 2 333 208 ist eine solche Dichtung bekannt. Die Wirkebenen der Dichtkante der Lippendichtung und die Wirkebene der Ringwendelfeder sind gegeneinander versetzt und zwar so, dass die Wirkebene der Ringwendelfeder zur Atmosphärenseite der Dichtung verschoben ist. Es ergibt sich dann ein Wert X, in der Druckschrift als Wert R bezeichnet, der positiv ist. Dieses wird als erforderlich angesehen, um eine gute Abdichtung zu erreichen und Verluste an Betriebsöl zu vermeiden. Um die Wirksamkeit der Dichtung zu verbessern, wird die Lippendichtung an der Luftseite mit einer konkaven vorgeformten Oberfläche ausgestattet. Dadurch wird ein scharf abgegrenzter Winkel zwischen Dichtkante und Wellenoberfläche gebildet. Dieser Winkel ist relativ groß und liegt zwischen 50 und 80 Grad. Der gegenüberliegende Winkel, der zur Hydraulik gerichtet ist, wird erheblich kleiner gewählt nämlich weniger als 10 Grad oder sogar 5 Grad, auf jeden Fall nicht größer als 20 Grad. Eine solche Dichtung erfüllt jedoch in vielen Fällen nicht die an sie gestellten Anforderungen. Bei höheren Drücken der Hydraulik und auch bei höheren Wellendrehzahlen besteht die Gefahr, dass diese Dichtungen trockenlaufen und einem hohen Abrieb unterworfen sind.

Eine andere Dichtungsart zeigt die DE 37 42 080 A1, bei der eine ausreichende Schmierung der Dichtleiste und damit eine höhere Lebensdauer angestrebt wird. Die Dichtung wird für niedrigviskose Medien eingesetzt, beispielsweise für Wasser wobei der Druck des Wassers größer ist als der Druck des gasförmigen Mediums auf der anderen Seite der Dichtung. Damit eine Förderung des Wassers unter der Dichtlippe hindurch eintritt, werden die Winkel zwischen den Dichtlippenflächen und der Welle sehr klein gewählt. Je niedriger der Viskositätsgrad der Flüssigkeit ist, desto kleiner wird der Winkel gewählt. Dabei soll der Winkel höchstens 12 Grad betragen. Zusätzlich sind an der Lippe hydrodynamisch wirkende Förderrillen angebracht, die so gestaltet sind, dass sie das flüssige Medium vom druckhöheren zum druckniedrigeren Medium fördern. Aus den beigefügten Zeichnungen ist erkennbar, dass die Wirkebene der Ringwendelfeder in Bezug zur Wirkebene der Dichtkante einen negativen Wert hat. Dieses ist für die Pumpwirkung der Dichtung notwendig. Er führt jedoch dazu, dass beträchtliche Mengen an Wasser durch die Dichtung hindurchgefördert werden. Solange es sich um Wasser handelt, beispielsweise bei Antriebswellen von Schiffen, ist eine solche Maßnahme hinzunehmen. Bei Antriebsmotoren ist dies jedoch nicht zulässig.

In der DE 2 352 992 A1 wird ein Radialwellendichtring beschrieben, bei dem der Wirkabstand der Wirkebenen der Dichtkante und der Ringwendelfeder im nicht eingebauten Zustand auch negativ sein kann. Angaben darüber, welchen Wert der Wirkabstand im eingebauten Zustand einnimmt sind der Schrift jedoch nicht zu entnehmen. Die Kontaktwinkel an der Bodenseite der Dichtlippe sind so gewählt, dass der auf der Atmosphärenseite vorhandene Kontaktwinkel größer ist als der auf der Hydraulikseite. Auch bei dieser Dichtung besteht die Gefahr des Trockenlaufens.

### Darstellung der Erfindung

Der Erfindung liegt deshalb die Aufgabe zugrunde, eine Radialwellendichtung zu schaffen, bei der kein Verschleiß an der Dichtlippe auftritt, eine Leckage weitgehend vermieden wird und trotzdem eine gute Schmierung an der Dichtlippe erreicht wird.

Die Dichtung soll vor allen Dingen in Bereichen eingesetzt werden, bei denen der Druck der Hydraulik deutlich über dem Atmosphärendruck liegt. In Abhängigkeit von der Drehzahl soll die Dichtung Hydraulikdrücke von über 5 bar bis zu 10 bar aushalten. Dabei soll auch die Dichtung bei allen Viskositäten einsetzbar sein.

Die Lösung der gestellten Aufgabe wird mit den Merkmalen des Anspruchs 1 erreicht.

Bei der Herstellung des Dichtringes wird folglich darauf geachtet, dass der Wert X zwischen kleiner als 0 und minus 2 mm liegt, vorzugsweise zwischen kleiner als 0 und minus 0,8 mm, so dass er in jedem Fall einen Wert hat der negativ ist. Dieser Wert X kann etwa 1 % des inneren Dichtringdurchmessers betragen. Durch das Einbauen des Dichtringes, d.h. das Aufziehen auf die Welle, werden die beiden genannten Ebenen aufeinander zubewegt und kommen in etwa übereinander zu liegen. Es zeigte sich, dass bei diesem Einbau des Dichtrings ein Minimum an Leckage erreicht wird; dennoch eine gute Schmierung vorhanden ist und ein Verschleiß an der Dichtlippe vermieden wird.

Zur Unterstützung dieser Maßnahme werden die Winkel zwischen den Dichtlippenflächen und einer an der Dichtkante anliegenden axial ausgerichteten Linie besonders geformt und zwar so, dass der zwischen der zur Atmosphärenseite gerichteten Dichtlippenfläche und der Linie im Längsschnitt vorhandene Winkel α größer ist als der zwischen der zur Hydraulikseite gerichteten Dichtlippenfläche und der Linie im Längsschnitt vorhandene Winkel β. Es konnte festgestellt werden, dass diese Winkelkonstellation zu einer Verringerung der wirksamen Dichtfläche zwischen Lippe und Welle auf ein Minimum führt. Die Winkelmaße werden so gewählt, dass der Winkel β 15 - 30 Grad, vorzugsweise 17 - 22 Grad beträgt und der Winkel α 35 - 65 Grad, vorzugsweise 45 - 60 Grad.

Als günstig erwies sich, wenn von der Dichtlippe ausgehend zur Atmosphärenseite hin eine Fettkammer angeordnet ist. Diese Fettkammer kann durch eine weitere Dichtlippe abgeschlossen sein, die mit der Dichtlippe integral verbunden ist. Hierbei ist es weiterhin zweckmäßig, dass die zur Atmosphärenseite gerichtete Dichtlippenfläche in zwei Abschnitte unterteilt ist, wobei der erste Abschnitt den Winkel α zur axialen Linie hat und der zweite Abschnitt den Winkel γ hat, der etwa halb so groß ist wie der Winkel β.

Bei eingebautem Dichtring sind die Winkel α und β etwa gleich. Sie haben dann Werte die zwischen 20 und 50 Grad, vorzugsweise bei 30 Grad liegen.

Die Dichtfunktion eines derart ausgeführten Dichtringes kann durch sogenannte dynamische Dichthilfen (Drallstrukturen), die zum Beispiel als erhabene Strukturen auf der Dichtlippenfläche zur Atmosphärenseite hin angeordnet sind, zusätzlich verbessert werden.

### Ausführung der Erfindung

Anhand eines in der Zeichnung dargestellten Ausführungsbeispiels wird die Erfindung näher erläutert.

Es zeigt:
- Fig. 1: den oberen Teil des Dichtrings im Längsschnitt;
- Fig. 2: im Schnitt vergrößert die Dichtlippenform und
- Fig. 3: im Schnitt vergrößert die Dichtlippenform bei eingebautem Dichtring,

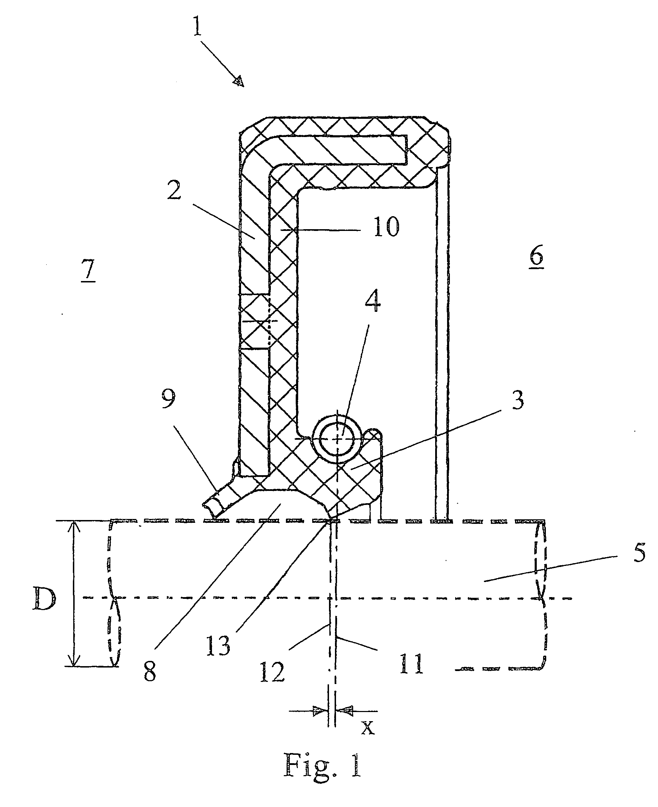

In der Figur 1 ist der obere Teile eines Radialwellendichtrings 1 im Längsschnitt gezeigt. Der Radialwellendichtring 1 besteht im wesentlichen aus dem metallenen ringförmigen Tragkörper 2 mit der daran durch Vulkanisation befestigten Dichtlippe 3. Die Dichtlippe 3 wird von der Ringwendelfeder 4 an die Welle 5 gedrückt. Die Hydraulikseite der Dichtung ist mit 6 bezeichnet und liegt auf der Zeichnung gesehen rechts vom Dichtring. Die Atmosphärenseite 7 befindet sich folglich links auf der Zeichnung. Zur Atmosphärenseite 7 hin hat der Dichtring die Fettkammer 8, die durch eine weitere Dichtlippe 9, die ebenfalls an der Welle 5 liegt abgeschlossen ist. Die Dichtlippen 3 und 9 sind integral miteinander verbunden und gehen über in den Überzug 10, der den Tragkörper 2 anbindet.

Die Figur 1 zeigt den Dichtring 1 im nichteingebauten Zustand. Aus diesem Grunde auch ist die Welle 5 nur gestrichelt angedeutet. Die Wirkebene 11 der Ringwendelfeder 4 ist zur Hydraulikseite 6 gegenüber der Wirkebene 12 der Dichtkante 13 der Dichtlippe 3 verschoben, so dass der Wert X, welcher den Abstand der beiden Wirkebenen 11 und 12 definiert, kleiner als Null ist. Der Wert X wird so gewählt, dass er etwa 1 Prozent des inneren Dichtringdurchmessers D beträgt. Dieser Dichtringdurchmesser D ist geringfügig kleiner als der Wellendurchmesser.

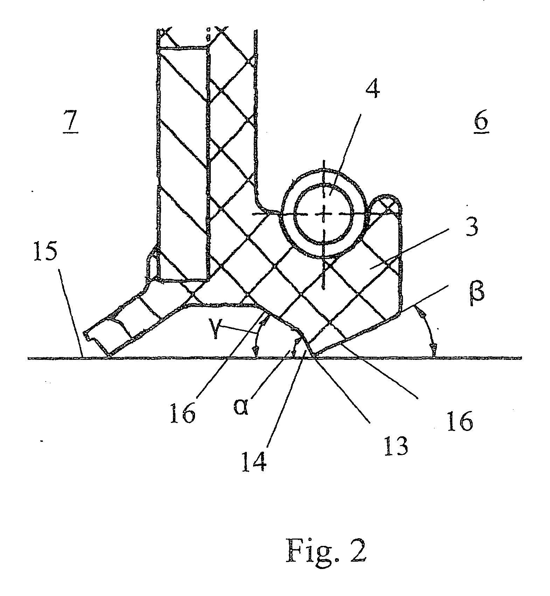

Um die Winkel an der Dichtlippe 3 besser darstellen zu können, ist in der Figur 2 der betreffende Teil des Dichtringes 1 vergrößert dargestellt. Die Dichtlippenfläche 14 die zur Atmosphärenseite 7 gerichtet ist, ist zur Linie 15 mit dem Winkel α ausgerichtet. Während der Winkel β die Neigung der Dichtlippenfläche 16 angibt, die zur Hydraulikseite 6 gerichtet ist. Im Ausführungsbeispiel beträgt der Winkel α 60 Grad während der Winkel β 20 Grad beträgt. Diese Winkelkombination in Verbindung mit der Zuordnung der Wirkebenen 11 und 12 von Ringwendelfeder 4 und Dichtkante 13 führt bei eingesetztem Dichtring 1 zu dem gewünschten Ergebnis. Die zur Atmosphärenseite 7 ausgerichteten Dichtlippenfläche 14 wird durch einen weiteren Abschnitt 16 ergänzt, der in Winkel γ zur Linie 15 liegt. Dieser Winkel γ ist kleiner gewählt als der Winkel β auf der anderen Seite der Dichtlippe 3.

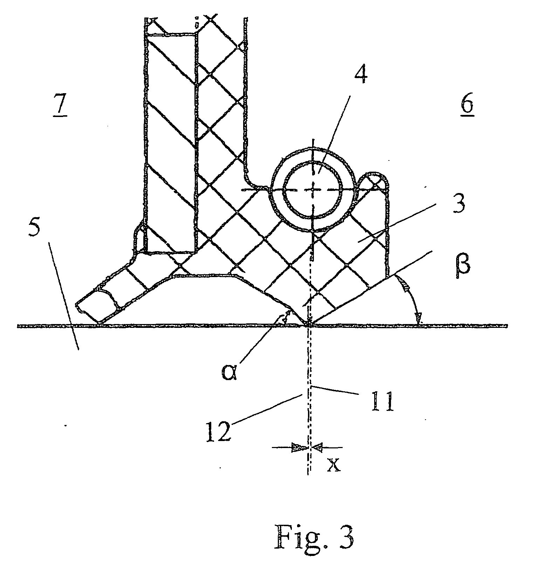

In der Figur 3 ist der Dichtring 1 vergrößert gezeichnet, nachdem er auf die Welle 5 aufgezogen ist. Die Winkel α und β haben sich verändert und betragen jetzt jeweils ca. 30 Grad. Die Wirkebenen 11 und 12 der Ringwendelfeder 4 und der Dichtkarte 13 liegen so gut wie übereinander. Die Kombination der Winkel α und β sowie die Zuordnung der Wirkebenen 11 und 12 zueinander bei eingebautem Dichtring 1 ergibt eine gezielte Undichtigkeit an der Abdichtung, so dass eine gewollte Leckage unter der Dichtkante eintritt.

## Patentansprüche

1. Verwendung eines Radialwellendichtrings (1) aus einem ringförmigen metallenen Tragkörper (2) und einer daran angeordneten Dichtlippe (3) zur Trennung zwischen einer unter Druck stehenden Hydraulikseite (6) und einer Atmosphärenseite (7), wobei die Dichtlippe (3) durch eine Ringwendelfeder (4) an eine Welle (5) drückbar ist und die Wirkebene (12) der Dichtkante (13) der Dichtlippe (3) als Bezugsebene mit dem Wert Null dient und eine Abweichung der Wirkebene (11) der Ringwendelfeder (4) zur Atmosphärenseite (7) als positiv und eine Abweichung zur Hydraulikseite (6) als negativ bezeichnet wird, wobei bei nichteingebautem Dichtring (1) die Wirkebene (11) der Ringwendelfeder (4) in Bezug zur Wirkebene (12) der Dichtkante (13) einen Wert x hat, der kleiner als Null ist, wobei bei eingebautem Dichtring (3) beide Wirkebenen (11, 12) in etwa übereinander liegen und bei nicht eingebautem Zustand der zwischen der zur Atmosphärenseite (7) gerichteten Dichtlippenfläche (14) und einer an der Dichtkante (13) anliegenden axial ausgerichteten Linie (15) im Längsschnitt vorhandene Winkel α größer ist als der zwischen der zur Hydraulikseite (6) gerichteten Dichtlippenfläche (16) und der Linie (15) im Längsschnitt vorhandene Winkel β,
**dadurch gekennzeichnet, dass** der Radialwellendichtring (1) in Bereichen verwendet wird, bei denen der Druck der Hydraulik über dem Atmosphärendruck, nämlich über 5 bar bis zu 10 bar, liegt, wobei der Winkel α zur Atmosphärenseite (7) ausgerichtet wird und wobei der Winkel β zur Hydraulikseite (6) ausgerichtet wird.

2. Verwendung nach Anspruch 1, **dadurch gekennzeichnet, dass** bei nichteingebautem Dichtring (1) der Wert x zwischen kleiner als 0 und minus 2 mm vorzugsweise zwischen kleiner als 0 und minus 0,8 mm liegt.

3. Verwendung nach Anspruch 1, **dadurch gekennzeichnet, dass** der Wert X in etwa 1 % des inneren Dichtringdurchmessers (D) im nicht eingebauten Zustand beträgt.

4. Verwendung nach einem der Ansprüche 1 bis 3, **dadurch gekennzeichnet, dass** bei nicht eingebautem Dichtring (1) der Winkel β 15 bis 30 Grad, vorzugsweise 17 bis 22 Grad, beträgt.

5. Verwendung nach einem der Ansprüche 1 bis 4, **dadurch gekennzeichnet, dass** bei nicht eingebautem Zustand der Winkel α 35 bis 65 Grad, vorzugsweise 40 bis 60 Grad, beträgt.

6. Verwendung nach einem der Ansprüche 1 bis 5, **dadurch gekennzeichnet, dass** von der Dichtlippe (3) zur Atmosphärenseite (7) hin eine Fettkammer (8) angeordnet ist.

7. Verwendung nach einem der Ansprüche 1 bis 6, **dadurch gekennzeichnet, dass** die Fettkammer (8) durch eine weitere Dichtlippe (9) abgeschlossen ist, die mit der Dichtlippe (3) integral verbunden ist.

8. Verwendung nach einem der Ansprüche 1 bis 7, **dadurch gekennzeichnet, dass** an die zur Atmosphärenseite (7) gerichtete Dichtlippenfläche (14) ein zweiter Abschnitt (16) anschließt, wobei der erste Abschnitt (14) den Winkel α zur Linie (15) hat und der zweite Abschnitt (16) den Winkel γ hat, der etwa halb so groß ist wie der Winkel β.

9. Verwendung nach einem der Ansprüche 1 bis 8, **dadurch gekennzeichnet, dass** bei eingebautem Dichtring (1) die Winkel α und β etwa gleich sind.

10. Verwendung nach Anspruch 9, **dadurch gekennzeichnet, dass** die Winkel α und β zwischen 20 und 50 Grad, vorzugsweise 30 Grad, betragen.

## Claims

1. Use of a radial shaft seal (1) comprising an annular metallic supporting body (2) and a sealing lip (3) which is arranged on the said supporting body (2), for the division between a hydraulic side (6) which is under pressure and an atmosphere side (7), it being possible to press the sealing lip (3) against a shaft (5) by a ring coil spring (4), and the plane of action (12) of the sealing edge (13) of the sealing lip (3) serving as a reference plane with the value zero, and a deviation of the plane of action (11) of the ring coil spring (4) to the atmosphere side (7) being designated as positive, and a deviation to the hydraulic side (6) being designated as negative, the plane of action (11) of the ring coil spring (4) having a value x in relation to the plane of action (12) of the sealing edge (13) when the seal (1) is not installed, which value x is smaller than zero, when the seal (1) is installed, both planes of action (11, 12) lying approximately one above the other and, in the non-installed state, the angle α which exists in longitudinal section between the sealing-lip face (14), which is oriented towards the atmosphere side (7), and an axially oriented line (15), which is in contact with the sealing edge (13), being larger than the angle β which exists in longitudinal section between the sealing-lip face (16), which is oriented towards the hydraulic side (6), and the line (15),
**characterized in that** the radial shaft seal (1) is used in regions, in which the pressure of the hydraulic system lies above atmospheric pressure, namely above 5 bar up to 10 bar, the angle α being oriented towards the atmosphere side (7) and the angle β being oriented towards the hydraulic side (6).

2. Use according to Claim 1, **characterized in that**, when the seal (1) is not installed, the value x lies between less than 0 and -2 mm, preferably between less than 0 and -0.8 mm.

3. Use according to Claim 1, **characterized in that** the value X is approximately 1% of the inner seal diameter (D) in the non-installed state.

4. Use according to one of Claims 1 to 3, **characterized in that**, when the seal (1) is not installed, the angle β is from 15 to 30 degrees, preferably from 17 to 22 degrees.

5. Use according to one of Claims 1 to 4, **characterized in that**, in the non-installed state, the angle α is from 35 to 65 degrees, preferably from 40 to 60 degrees.

6. Use according to one of Claims 1 to 5, **characterized in that** a grease chamber (8) is arranged from the sealing lip (3) towards the atmosphere side (7).

7. Use according to one of Claims 1 to 6, **characterized in that** the grease chamber (8) is closed off by a further sealing lip (9) which is connected integrally to the sealing lip (3).

8. Use according to one of Claims 1 to 7, **characterized in that** a second section (16) adjoins the sealing-lip face (14) which is oriented towards the atmosphere side (7), the first section (14) being at the angle α with respect to the line (15) and the second section (16) being at the angle γ which is approximately half as large as the angle β.

9. Use according to one of Claims 1 to 8, **characterized in that**, when the seal (1) is installed, the angles α and β are approximately equal.

10. Use according to Claim 9, **characterized in that** the angles α and β are between 20 and 50 degrees, preferably 30 degrees.

## Revendications

1. Utilisation d'une bague d'étanchéité à lèvre radiale (1) composée d'un corps de support métallique annulaire (2) et d'une lèvre d'étanchéité (3) disposée sur celui-ci pour réaliser la séparation entre un côté hydraulique (6) se trouvant sous pression et un côté atmosphérique (7), dans laquelle la lèvre d'étanchéité (3) peut être pressée sur un arbre (5) au moyen d'un ressort hélicoïdal annulaire (4) et le plan d'action (12) de l'arête d'étanchéité (13) de la lèvre d'étanchéité (3) fait office de plan de référence avec la valeur zéro et une déviation du plan d'action (11) du ressort hélicoïdal annulaire (4) vers le côté atmosphérique (7) est considérée comme positive et une déviation vers le côté hydraulique (6) est considérée comme négative, dans laquelle, lorsque la bague d'étanchéité (1) n'est pas montée, le plan d'action (11) du ressort hélicoïdal annulaire (4) présente par rapport au plan d'action (12) de l'arête d'étanchéité (13) une valeur x qui est inférieure à zéro, dans laquelle, lorsque la bague d'étanchéité (1) est montée, les deux plans d'action (11, 12) sont sensiblement superposés et, à l'état non monté, l'angle α existant en coupe longitudinale entre la face de la lèvre d'étanchéité (14) orientée vers le côté atmosphérique (7) et une ligne (15) orientée axialement passant par l'arête d'étanchéité (13) est plus grand que l'angle β existant en coupe longitudinale entre la face de la lèvre d'étanchéité (16) orientée vers le côté hydraulique (6) et la ligne (15), **caractérisée en ce que** la bague d'étanchéité à lèvre radiale (1) est utilisée dans les régions dans lesquelles la pression du système hydraulique est supérieure à la pression atmosphérique, à savoir au-dessus de 5 bar à 10 bar, l'angle α étant orienté par rapport au côté atmosphérique (7) et l'angle β étant orienté par rapport au côté hydraulique (6).

2. Utilisation selon la revendication 1, **caractérisée en ce que**, lorsque la bague d'étanchéité (1) n'est pas montée, la valeur x est comprise entre une valeur inférieure à zéro et moins 2 mm, de préférence entre une valeur inférieure à zéro et moins 0,8 mm.

3. Utilisation selon la revendication 1, **caractérisée en ce que** la valeur x vaut environ 1 % du diamètre intérieur (D) de la bague d'étanchéité à l'état non monté.

4. Utilisation selon l'une quelconque des revendications 1 à 3, **caractérisée en ce que**, lorsque la bague d'étanchéité (1) n'est pas montée, l'angle β vaut de 15 à 30 degrés, de préférence de 17 à 22 degrés.

5. Utilisation selon l'une quelconque des revendications 1 à 4, **caractérisée en ce que**, à l'état non monté, l'angle α vaut de 35 à 65 degrés, de préférence de 40 à 60 degrés.

6. Utilisation selon l'une quelconque des revendications 1 à 5, **caractérisée en ce qu'**une chambre à graisse (8) est disposée sur le côté de la lèvre d'étanchéité (3) en direction du côté atmosphérique (7).

7. Utilisation selon l'une quelconque des revendications 1 à 6, **caractérisée en ce que** la chambre à graisse (8) est fermée par une autre lèvre d'étanchéité (9), qui est formée d'un seul tenant avec la lèvre d'étanchéité (3).

8. Utilisation selon l'une quelconque des revendications 1 à 7, **caractérisée en ce qu'**une deuxième partie (16) se raccorde à la face de la lèvre d'étanchéité (14) orientée vers le côté atmosphérique (7), la première partie (14) formant l'angle α avec la ligne (15) et la deuxième partie (16) formant l'angle γ qui vaut environ la moitié de l'angle β.

9. Utilisation selon l'une quelconque des revendications 1 à 8, **caractérisée en ce que**, lorsque la bague d'étanchéité (1) est montée, les angles α et β sont sensiblement égaux.

10. Utilisation selon la revendication 9, **caractérisée en ce que** les angles α et β sont compris entre 20 et 50 degrés, et valent de préférence 30 degrés.
